# EUROPEAN PATENT SPECIFICATION

(11) **EP 1 154 176 B1**
(45) Date of publication and mention of the grant of the patent: **03.03.2004**
(21) Application number: 01201563.2
(22) Date of filing: 01.05.2001
(51) Int. Cl.: F16K 1/52

(54) **Insert valve**
Einbauventil
Soupape insérable

(30) Priority: 10.05.2000 DE 10022730
(43) Date of publication of application: 14.11.2001
(73) Proprietor: Danfoss A/S, 6430 Nordborg (DK)
(72) Inventor: Hölck, Poul, 8330 Beder (DK)

(56) References cited:
- DE-A- 3 300 623
- DE-A- 4 407 373
- DE-A- 4 411 013
- DE-A- 4 442 744
- DE-U- 8 911 899

## Description

The invention concerns an insert valve, being mountable in an insert connector of a fluid line and having a presetting element, the presetting element being rotatable in relation to a valve housing by means of an adjustment element and a transmission element, being unrotatable in relation to the transmission element and guiding a valve rod that carries the valve closing piece coaxially and is displaceable to a limited extent in relation to the valve seat.

In a known insert valve of this kind (see, for example, DE 33 00 623 C2 or DE 44 42 744 A1), which can be used in connection with a valve top part, the kᵥ-value is adjustable by means of an adjustment ring and the adjustment element being rotatable by means of the adjustment ring in such a way that on rotation, a wall part, axially extending the circumferential wall of the presetting element, covers an opening if the valve housing partly or completely. When the wall part covers the opening completely, the flow through the valve should be completely blocked. As, however, the relative rotation of presetting element and valve housing requires a play between both, a complete blocking is not possible.

The invention is based on the task of providing an insert valve as mentioned in the introduction, in which the flow is completely blocked, when the kᵥ-value is set at zero.

According to the invention, this task is solved in that a rotation of the adjustment element in relation to the valve seat and the transmission element displaces the presetting element in the one direction axially until a first stop and in the other direction until the valve closing piece bears on the valve seat.

With this solution, the rotation of the adjustment element does not only rotate the presetting element, but also axially displaces it, so that its displacement until the first stop limits the maximum lift of the valve closing piece and thus the maximum kᵥ-value. The minimum kᵥ-value appears in the closing position of the valve closing piece, in which it bears on the valve seat and blocks the flow completely.

Preferably, it is ensured that the presetting element is supported on a spiral-shaped guide, which is coaxial to the valve rod. This enables a simple embodiment of the guide.

In a particularly simple way, the guide can thus be a ramp, on which the presetting element rests via a projection. On its upper end the ramp can have the first stop, and on its lower end a second stop. Both stops result in a defined presetting range.

When the ramp is arranged on the inside of the valve housing, it can be designed in a simple way.

Alternatively, the presetting element can have a thread, which engages with a thread of the valve housing.

In the following, the invention and its embodiments are described on the basis of drawings of preferred embodiments, showing:
Fig. 1 a side view of a first embodiment of an insert valve according to the invention, partly shown in an axial section and inserted in a fluid line
Fig. 2 an additional, partial axial section of the insert valve according to Fig. 1
Fig. 3 a cross section through the valve housing in the area of its side opening provided for the entry of the fluid
Fig. 4 a partial axial section through a further embodiment of the insert valve according to the invention, with a presetting of the kᵥ-value at which the valve is completely closed
Fig. 5 the same section as is Fig. 4, however with a medium presetting
Fig. 6 the same sectional view as in Fig. 4, however with a presetting with maximum kᵥ-value
Fig. 7 a side view of a part of the insert valve according to Fig. 4
Fig. 8 a cross section according to the Fig. 3 of the first embodiment

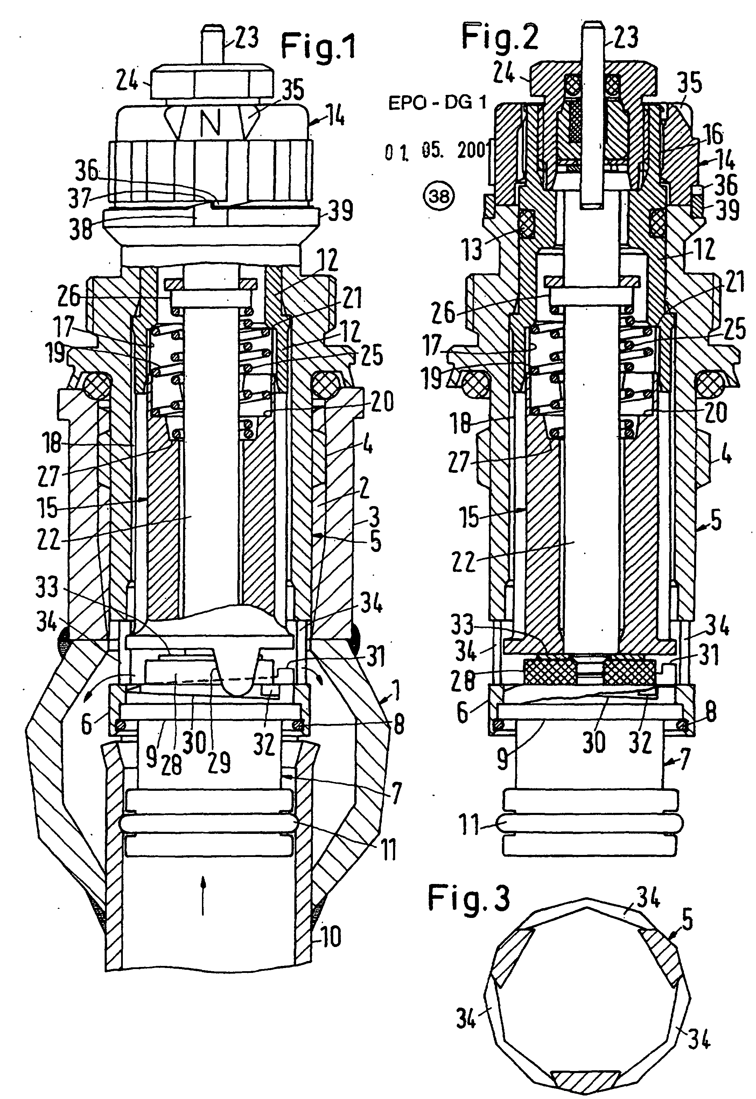

The insert valve according to the Figs. 1 to 3 is inserted in a fluid line (1) for the hot water in the inlet of a radiator in a heating system, that is, in an inner thread (2) of an insert connector (3) with a thread section (4) on the outside of a valve housing (5). In an lower end section (6) of the valve housing (5) an insert part (7) is fixed by means of a retaining ring (8), which on the one side engages in an annular groove on the inside of the end section 6 and on the other side engages under a collar (9) of the insert part (7) bearing on an inner shoulder of the end section (6). Therefore, the insert part (7) can also be regarded as a part of the valve housing (5). With its free end, it (7) projects into a section of an inlet pipe (10) projecting into the fluid line (1), and is sealed against the inlet pipe (10) by means of an O-ring (11). The insert connector (3) and the inlet pipe (10) are welded together with the fluid line (1).

In the valve housing (5) a cylindrical transmission element (12) is arranged to be rotatable and sealed towards the valve housing (5) by means of an O-ring (13). By means of an adjustment ring (14), coupled with the transmission element 12 and forming the adjustment element, a cylindrical presetting element (15), supported in the valve housing (5), can be rotated. The adjustment ring (14) is coupled with the transmission element (12) through axial ribs and grooves (16). Also the inside of the transmission element (12) has axial ribs (17) and grooves between them. In the same way, the outside of the presetting element (15) is provided with axial ribs (18) and grooves between them, the ribs (17, 18) and the grooves engaging in each other. Further, the presetting element (15) has a coaxial bore expanding stepwise towards one end, in which an outer spring (19) is supported with its one end on a shoulder (20) of the bore and with its other end on an inner shoulder (21) of the transmission element (12). Thus, the presetting element (15) is axially displaceable inside the transmission element 12, against or by means of, respectively, the force of the spring (19).

In the bore of the presetting element (15) a valve rod (22) is arranged to be axially displaceable. By means of a tappet (23), which is lead to the outside through a stuffing box (24), the valve rod can be axially displaced against the force of a return spring (25) between a collar (26) of the valve rod (22) and an additional inner shoulder (27) of the bore of the presetting element (15), when an operating member acts upon the outer end of the tappet (13), for example the working element of a thermostat top part.

On the end projecting from the presetting element (15, the valve rod (22) has a valve closing piece (28) of a resilient material, which cooperates with a valve seat, not shown in Figs. 1 and 2, inside the insert part (7).

Further, the lower outer edge of the presetting element (15) is provided with an axially projecting projection (29), via which the presetting element (15) bears on a spiral-shaped guide in the shape of a gradually increasing ramp (30), which is coaxial to the valve rod (22). The ramp (30) has on its upper end a first stop (31) and on its lower end a second stop (32), between which the projection (29) can be moved back and forth to a limited extent, when the setting ring (14) and thus also the presetting element (15) are rotated, meaning that the presetting element (15) is axially displaceable in the valve housing (5). Alternatively, however, it is also possible to make the ramp (30) and the stops (31), (32) on the inside of the valve housing (5) or its end section (6), respectively.

This displacement of the presetting element (15) in the valve housing (5) limits the lift of the valve rod (22) and the valve closing piece (28) fixed on it, when in the course of the lifting movement of the valve rod (22), caused by the return spring, the valve closing piece (28) comes to rest against one free end of the presetting element (15) via a washer (33) serving as support for the valve closing piece (28).

Through the rotation of the setting ring (14) the desired presetting of the kᵥ-value is also possible via the transmission element (12) and the presetting element (15), the fluid flowing substantially unprevented through lateral openings (34) in the valve housing (5), merely limited by the actual setting of the opening width of the insert valve between the closing piece (28) and the valve seat.

When the kᵥ-value is set at O, that is, the projection (29) bears on the stop (32) and the presetting element (15) assumes its lowest position, the closing piece (28) bears tightly on the valve seat. The valve is then completely blocked and cannot be opened by the return spring (25) or a subsiding of an operating member acting upon the tappet (23). With this setting of the kᵥ-value, the fluid can thus not continue to flow unwantedly, not even in small quantities.

At the bottom of an indent (35), the setting ring (14) is provided with a marking N for the neutral position and with a tooth (36). On a rotation of the setting ring (14), the tooth (36) engages with a tooth (37) in the area of a marking (38) of a reference ring (39) arranged to be rotatable against a frictional force on the circumference of the valve housing (5), thus taking along the reference ring (39). Thus, the mutual setting of setting ring (14) and reference ring (39) is maintained, so that a rotation of the setting ring (14) will bring the reference ring (39) to any desired position. Then, the presetting of the insert valve at the desired kᵥ-value occurs through a backwards rotation of the setting ring (14).

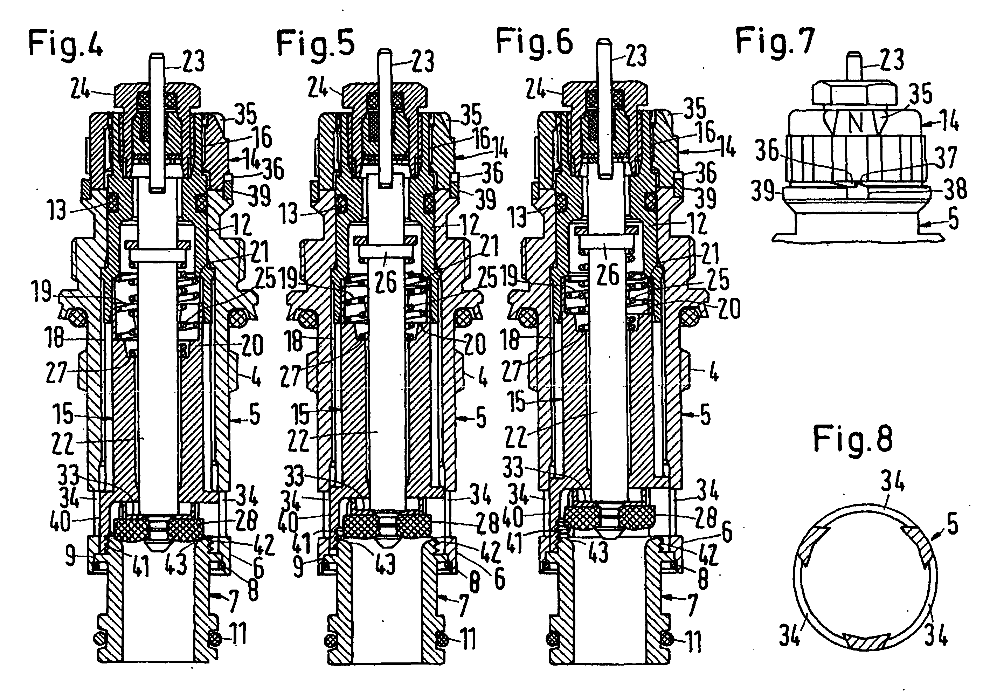

The embodiment according to the Figs. 4 to 8 merely differs from that according to the Figs. 1 to 3 in that on the inside of a wall part (40) projecting axially at its one end, the presetting element (15) has a thread (41), which engages with a thread (42) on the valve housing (5), or to be exact, on the insert part (7) forming an extension of the valve housing (5). Also here, the presetting element (15) is axially displaceable by rotation between a stop formed by the shoulder (21) and the stop formed by the collar (9) of the insert part (7). When the presetting element (15) bears on the upper stop formed by the shoulder (21), the maximum kᵥ-value is set. When, however, the presetting element (15) bears on the lower stop formed by the collar 9, the kᵥ-value is equal to zero, the valve closing piece (28) bearing on the valve seat formed by the upper bevelled edge of the insert part 7, the flow thus being completely blocked.

Otherwise, the mode of operation and the design is like in the first embodiment.

A modification of the second embodiment could be that the thread (41) is made on the inside of the valve housing (5) axially above the openings (34) and the thread (42) is made on the outside of the wall part (40).

## Claims

1. Insert valve, being mountable in an insert connector (3) of a fluid line (1) and having a presetting element (15), the presetting element (15) being rotatable in relation to a valve housing (5) by means of an adjustment element (14) and a transmission element (12), being unrotatable in relation to the transmission element (12) and guiding a valve rod (22) that carries the valve closing piece (28) coaxially and is displaceable to a limited extent in relation to the valve seat (43), **characterised in that** a rotation of the adjustment element (14) in relation to the valve seat (43) and the transmission element (12) displaces the presetting element (15) in the one direction axially until a first stop (31; 21) and in the other direction until the valve closing piece (28) bears on the valve seat (43).

2. Insert valve according to claim 1, **characterised in that** the presetting element (15) is supported on a spiral-shaped guide, which is coaxial to the valve rod (22).

3. Insert valve according to claim 2, **characterised in that** the guide is a ramp (30), on which the presetting element (15) rests via a projection (29).

4. Insert valve according to claim 3, **characterised in that** on its upper end the ramp (30) has the first stop (31), and on its lower end a second stop (32).

5. Insert valve according to claim 3 or 4, **characterised in that** the ramp (30) is arranged in the valve housing (5).

6. Insert valve according to claim 1 or 2, **characterised in that** the presetting element (15) has a thread (41), which engages with a thread (42) of the valve housing (5).

## Patentansprüche

1. Einbauventil, das in einen Einbaustutzen (3) einer Fluidleitung (1) einsetzbar ist und ein Voreinstellelement (15) enthält, wobei das Voreinstellelement (15) mittels eines Einstellelements (14) und eines Übertragsungselements (12) relativ zu einem Ventilgehäuse (5) drehbar ist, relativ zu dem Übertragsungselement (12) drehfest ist und eine das Ventilverschlußstück (28) tragende Ventilstange (22) koaxial, relativ zu dem Ventilsitz (43) begrenzt verschiebbar, führt, **dadurch gekennzeichnet, daß** das Voreinstellelement (15) durch die Verdrehung des Einstellelements (14) relativ zu dem Ventilsitz (43) und dem Übertragungselement (12) in der einen Richtung axial bis gegen einen ersten Anschlag (31; 21) und in der anderen Richtung bis zur Anlage des Ventilverschlußstücks (28) am Ventilsitz (43) verstellbar ist.

2. Einbauventil nach Anspruch 1, **dadurch gekennzeichnet, daß** das Voreinstellelement (15) auf einer schraubenlinienförmigen, zur Ventilstange (22) koaxialen Führung abgestützt ist.

3. Einbauventil nach Anspruch 2, **dadurch gekennzeichnet, daß** die Führung eine Rampe (30) ist, auf der sich das Voreinstellelement (15) über einen Vorsprung (29) abstützt.

4. Einbauventil nach Anspruch 3, **dadurch gekennzeichnet, daß** die Rampe (30) an ihrem oberen Ende den ersten Anschlag (31) und an ihrem weiteren Ende einen zweiten Anschlag (32) aufweist.

5. Einbauventil nach Anspruch 3 oder 4, **dadurch gekennzeichnet, daß** die Rampe (30) im Ventilgehäuse (5) angeordnet ist.

6. Einbauventil nach Anspruch 1 oder 2, **dadurch gekennzeichnet, daß** das Voreinstellelement (15) ein Gewinde (41) aufweist, das mit einem Gewinde (42) des Ventilgehäuses (5) in Eingriff steht.

## Revendications

1. Soupape insérable pouvant être montée dans un raccord d'insertion (3) d'une conduite de fluide (1) et comportant un élément de pré-montage (15), l'élément de pré-montage (15) étant rotatif par rapport à un logement de soupape (5) au moyen d'un élément d'ajustage (14) et d'un élément de transmission (12), ne pouvant être mis en rotation par rapport à l'élément de transmission (12) et guidant une tige de soupape (22) qui porte la pièce de fermeture de soupape (28) coaxialement et peut être déplacé dans des proportions limitées par rapport au siège de soupape (43), **caractérisée en ce qu'**une rotation de l'élément d'ajustage (14) par rapport au siège de soupape (43) et à l'élément de transmission (12) déplace l'élément de pré-montage (15) dans une direction axialement jusqu'à une première butée (31;21) et dans l'autre direction jusqu'à ce que la pièce de fermeture de soupape (28) vienne en appui sur le siège de soupape (43).

2. Soupape insérable selon la revendication 1,
**caractérisée en ce que** l'élément de pré-montage (15) est supporté par un guidage en forme de spirale qui est coaxial à la tige de soupape (22).

3. Soupape insérable selon la revendication 2,
**caractérisée en ce que** le guidage est une rampe (30), sur laquelle repose l'élément de pré-montage (15) par l'intermédiaire d'une saillie (29).

4. Soupape insérable selon la revendication 3,
**caractérisée en ce que** sur son extrémité supérieure la rampe (30) comporte la première butée (31) et sur son extrémité inférieure une seconde butée (32).

5. Soupape insérable selon la revendication 3 ou 4,
**caractérisée en ce que** la rampe (30) et disposée dans le logement de soupape (5).

6. Soupape insérable selon la revendication 1 ou 2,
**caractérisée en ce que** l'élément de pré-montage (15) présente un filetage (41) qui coopère avec une filetage (42) du logement de soupape (5).
